# EUROPEAN PATENT SPECIFICATION

(11) **EP 4 031 058 B1**
(45) Date of publication and mention of the grant of the patent: **21.02.2024**
(21) Application number: 20772440.2
(22) Date of filing: 11.09.2020
(51) Int. Cl.: A61C 7/14, B33Y 80/00

(54) **METHODS OF MANUFACTURING A TRANSFER APPARATUS INCLUDING GINGIVALLY EXTENDING CHANNELS**
HERSTELLUNGSVERFAHREN FÜR EINE ÜBERTRAGUNGSVORRICHTUNG MIT SICH GINGIVAL ERSTRECKENDEN KANÄLEN
PROCÉDÉ DE FABRICATION D'UN APPAREIL DE TRANSFERT COMPRENANT DES CANAUX S'ÉTENDANT DE MANIÈRE GINGIVALE

(30) Priority: 18.09.2019 US 201962902200 P
(43) Date of publication of application: 27.07.2022
(73) Proprietor: 3M Innovative Properties Company, Saint Paul, Minnesota 55133-3427 (US)
(72) Inventor: DUFOUR, Joseph R., Saint Paul, Minnesota 55133-3427 (US); CINADER, David K., Jr., Saint Paul, Minnesota 55133-3427 (US); THAO, Sheng, Saint Paul, Minnesota 55133-3427 (US); SCHMOLL, Jeremy A., Saint Paul, Minnesota 55133-3427 (US); SEE, Peter, 49152 Bad Essen (DE); STARK, Nicholas A., Saint Paul, Minnesota 55133-3427 (US); RABY, Richard E., Saint Paul, Minnesota 55133-3427 (US)
(74) Representative: Vossius & Partner Patentanwälte Rechtsanwälte mbB
(86) International application number: PCT/IB2020/058481
(87) International publication number: WO 2021/053480

(56) References cited:
- US-A1- 2005 233 276
- US-A1- 2015 359 610
- US-B2- 7 658 610

## Description

### Background

Orthodontic appliances are used in orthodontic treatments for moving one or more teeth from an initial position (sometimes referred to as malposition or malocclusion) to a desired position in a patient's dentition. For example, the patient's teeth may be moved such that their labial sides are aligned with each other to achieve or maximize an aesthetically pleasant appearance of the overall dentition. Further in some cases one or more teeth may be moved to correct a malocclusion. The movement of teeth is typically achieved in traditional orthodontic braces by a pre-biased archwire which is attached via brackets to the teeth, and which applies a force to the teeth toward the desired position over a longer time period. The ends of orthodontic archwires are often connected to small appliances known as buccal tubes that are, in turn, secured to the patient's molar teeth. In many instances, a set of brackets, buccal tubes and an archwire is provided for each of the upper and lower dental arches.

In many types of orthodontic techniques, the precise position of the appliances on the teeth is an important factor for helping to ensure that the teeth move to their intended final positions. For example, one common type of orthodontic treatment technique is known as the "straight-wire" technique, where the archwire lies in a horizontal plane at the conclusion of treatment. If, for example, a bracket is attached to the tooth at a location that is too close to the occlusal or outer tip of the tooth, the orthodontist using a straight-wire technique will likely find that the tooth in its final position is unduly intruded. On the other hand, if the bracket is attached to the tooth at a location closer to the gingiva than is appropriate, it is likely that the final position of the tooth will be more extruded than desired.

So-called treatment planning systems have been used to determine the desired position of the teeth in a computer simulation in advance of any actual treatment. Such a planning system helps for example for avoiding collisions between the teeth and brackets in tooth positions outside the initial position, and further allows for the brackets and the archwire to be designed and arranged to match with a variety of clinical situations, for example with the position of the teeth in the initial position, in the desired position, and positions between. In particular for lingual brackets such treatment planning is widely used. Lingual brackets often have a customized design individually for every tooth and patient because, other than the labial surfaces of a tooth, the lingual surfaces greatly vary in shape relative to each other so that a "one size fits all" bracket shape typically cannot be used. Some treatment planning systems also allow for designing such customized brackets which precisely match a tooth surface and the required clinical situations of a patient. Accordingly, customized brackets typically have to be precisely placed at positions on the teeth which are predetermined during the treatment planning.

Brackets may be placed on teeth through both direct and indirect bonding techniques. In general, indirect bonding techniques have involved the use of a transfer apparatus (e.g., a jig, a tray, or a bonding template) having a shape that matches the configuration of at least part of a patient's dental arch. A set of appliances such as brackets are releasably connected to the apparatus at certain, predetermined locations. Adhesive is applied to the base of each appliance, and the apparatus is then placed over the patient's teeth to ensure contact between the appliance base and corresponding tooth surface until such time as the adhesive hardens. Next, the apparatus is detached from the teeth as well as from the appliances, with the result that all of the appliances previously connected to the apparatus are now bonded to the respective teeth at their intended, predetermined locations.

International Publication No. WO2014/093084 (Blees et al.) describes a method of making a transfer tray from an integrated physical mockup. The integrated physical mockup represents a shape composed of the positive shape of a patient's dental arch and the positive shape of a set of bracket analogs. The bracket analogs may substantially correspond in shape to the shape of the desired orthodontic bracket, but may include less substantial or fewer undercuts, grooves, and recesses than said corresponding bracket body. The shape of the dental arch and the set of analogs can cooperate to form one contiguous piece, which can allow for creation of a transfer tray in which brackets can be removably placed and positioned without substantially damaging the transfer tray. Further a transfer tray prepared by use of the integrated physical mock up can allow precise positioning of the brackets, while permitting removal of the brackets at relatively low forces. US 7658610 B2 discloses a dental template to position an object on a patient's tooth includes digitizing the patient's tooth; adding virtual objects to predetermined three-dimensional positions on the digitized tooth; and fabricating the dental template to locate the object at the predetermined 3D position on the patient's tooth. The template can be used for etching or for positioning brackets on teeth.

### Summary of the Invention

The invention is as defined in the independent claim.

Formation of a transfer tray over analogs or approximations of the selected bracket shape puts the method of WO2014/093084 in contrast to many indirect bonding systems, which are typically directly formed over the selected orthodontic bracket or exact approximations thereof. However, a difficulty with physical models used in this process is that the bracket analogs must typically be adjusted to remove features (e.g., hooks and tie-wings) with large overhangs that are difficult to create via additive manufacturing techniques or that would require supports. The use of supports requires more material, time in the manufacturing process to remove, and introduces risk of damage to the appliance analogs which would result in a defective transfer apparatus.

The inventors of the present disclosure discovered that block-out ramps and other structures could be coupled to the appliance analogs and extruded along surfaces of the dentition model. This approach tends to improve manufacturability, appliance loading, and appliance removal. The virtual merging of a dentition model with analogs and ramps allows a physical model to be created without extraneous supports. Forming a transfer apparatus over such physical models also create a channel providing clearance for tweezers when loading appliances into the transfer apparatus.

In one aspect, the present disclosure provides a orthodontic transfer apparatus (not claimed) for seating orthodontic appliances on a dental arch, the apparatus comprising: a body including an interior surface substantially conforming to the contour of at least one tooth of the dental arch, an appliance receptacle, and a channel in fluid communication with and extending from the receptacle in a gingival direction, wherein a depth of the channel adjacent the receptacle is greater than a depth of the channel at the gingival edge of the tray body.

In another aspect, the present disclosure provides a method of making an orthodontic transfer apparatus including a body, the method comprising providing a three-dimensional, virtual model of at least a portion of a dental arch, the dental arch including a plurality of virtual teeth, gingiva, and a mold body extending from the gingiva. The method further includes providing a virtual appliance analog including a base and a body, the appliance analog optionally including a block-out ramp precursor extending from a gingival region of the appliance body and placing the appliance analog on a labial or lingual surface of a tooth of the plurality of virtual teeth. The block-out ramp precursor is then extruded from the appliance analog to at least an area adjacent the gingiva. Once the extrusion step is complete for the requisite number of ramps, a physical model of the combined virtual dental arch and appliance analogs is fabricated and a transfer apparatus over the physical model.

The transfer apparatus may be formed by providing an elastic sheeting on the physical mockup to cover at least part of the tooth side of the mockup by the sheeting. Next, a plastic sheeting may be disposed on the mockup with the elastic sheeting arranged between the plastic sheeting and the mockup. The plastic sheeting is deformed over the mockup such that it encloses at least the tooth side of the mockup and such that it embraces the elastic sheeting between the plastic sheeting and the mockup. Subsequently, the elastic sheeting can be replaced with a hardenable material, which is allowed to harden. Other materials and methods for forming the apparatus (e.g., tray) are also possible.

In providing the physical mockup, the methods of the disclosure can include the steps of providing a virtual dental arch replicating at least part of a patient's dental arch and providing a virtual set of orthodontic brackets for the virtual dental arch. A virtual set of analogs are accordingly provided (e.g., created), each analog being associated with a virtual bracket of the virtual set of brackets and approximating or representing the shape of the associated virtual bracket. The shape of at least one of the analogs usually differs from the shape of the associated bracket, but not necessarily. The analogs are placed at the desired locations on the tooth surface, and a virtual mockup is achieved, with the virtual dental arch and the set of virtual analogs subsequently merged. A physical mockup can then be manufactured based on the virtual mockup.

In another aspect, the present disclosure provides an orthodontic transfer apparatus (not claimed) for seating orthodontic appliances on a dental arch, the apparatus comprising a body including an interior surface substantially conforming to the contour of at least one tooth of the dental arch, an appliance receptacle, and a channel in fluid communication with and extending from the receptacle in a gingival direction, the channel connecting the gingival edge of the body with the receptacle.

For the purpose of this specification, the term "virtual" refers to a three-dimensional computer representation of an object, preferably based on a mathematical representation of a three-dimensional shape in data form and processable by a computer. Such virtual objects in the form of data including their visualizations (for example wire frames or digital renderings) are widely known in the field of Computer Aided Design (CAD).

For the purpose of the present specification the term "set of" refers to a "plurality of".

As used herein, "hardenable" is descriptive of a material or composition that can be cured (e.g., polymerized or crosslinked) or at least partially solidified, for example, by removing solvent (e.g., by evaporation and/or heating); heating to induce polymerization and/or crosslinking; irradiating to induce polymerization and/or crosslinking; and/or by mixing one or more components to induce polymerization and/or crosslinking. As used herein, "hardened" refers to a material or composition that has been cured (e.g., polymerized or crosslinked) or solidified.

As used herein as a modifier to a property or attribute, the term "generally", unless otherwise specifically defined, means that the property or attribute would be readily recognizable by a person of ordinary skill but without requiring absolute precision or a perfect match (e.g., within +/- 20 % for quantifiable properties). The term "substantially", unless otherwise specifically defined, means to a high degree of approximation (e.g., within +/- 10% for quantifiable properties) but again without requiring absolute precision or a perfect match. Terms such as same, equal, uniform, constant, strictly, and the like, are understood to be within the usual tolerances or measuring error applicable to the particular circumstance rather than requiring absolute precision or a perfect match.

"Mesial" means in a direction toward the center of the patient's curved dental arch.

"Distal" means in a direction away from the center of the patient's curved dental arch.

"Occlusal" means in a direction toward the outer tips of the patient's teeth.

"Gingival" means in a direction toward the patient's gums or gingiva.

"Facial" means in a direction toward the patient's cheeks or lips.

"Lingual" means in a direction toward the patient's tongue.

In several places throughout the application, guidance is provided through lists of examples, which examples can be used in various combinations. In each instance, the recited list serves only as a representative group and should not be interpreted as an exhaustive list.

### Brief Description of the Figures

- Fig. 1: is a facial view of a physical mockup having a set of appliance analogs according to embodiments of the disclosure;
- Fig. 2: is an occlusal view of a physical mockup of Fig. 1;
- Fig. 3A: is an enlarged, partial perspective view of a tooth including an appliance analog and ramp;
- Fig. 3B: is an enlarged, partial perspective view of another tooth including an appliance analog and ramp;
- Fig. 4: is a workflow for creating a virtual mockup according to an embodiment of the present disclosure;
- Fig. 5: is a facial view of a virtual mockup including appliance analogs placed on dental surfaces according to embodiments of the disclosure;
- Fig. 6A: is a perspective view of an appliance analog including a ramp precursor according to embodiments of the disclosure;
- Fig. 6B: is a perspective view of an appliance analog including a ramp precursor according to another embodiment of the present disclosure;
- Fig. 7: is a facial view of a virtual mockup including extruded ramps according to embodiments of the present disclosure;
- Fig. 8: is a facial view of a virtual mockup including extruded ramps according to other embodiments of the disclosure.
- Fig. 9: is a photograph of a transfer tray formed from a physical mockup of the present disclosure;
- Fig. 10: is a photograph of a section of the transfer tray of Fig. 9 enlarged to show certain features;
- Fig. 11: is a schematic cross-sectional view of a transfer tray formed from the physical mockups of the present disclosure;
- Fig. 12: is a schematic cross-sectional view of a transfer apparatus of Fig. 9 having a bracket placed in a receptacle, according to an embodiment of the disclosure.
- Fig . 13: is a perspective view of an appliance analog on a tooth of a virtual mockup of a patient's dentition according to embodiments of the present disclosure;
- Fig. 14: is a perspective view of a cross-section of the appliance of Fig. 9 and an extrusion path along the FACC; and
- Fig. 15: is a perspective view of an extruded ramp located gingivally from the appliance of Fig. 13 and generally following the outer contour of the virtual dentition and support body, according to an embodiment of the present disclosure.

Layers in the depicted embodiments are for illustrative purposes only and are not intended to define the thickness, relative or otherwise, or the location of any component.

While the above-identified figures set forth several embodiments of the disclosure, other embodiments are also contemplated, as noted in the description. In all cases, this disclosure presents the invention by way of representation and not limitation.

### Detailed Description of the Illustrative Embodiments

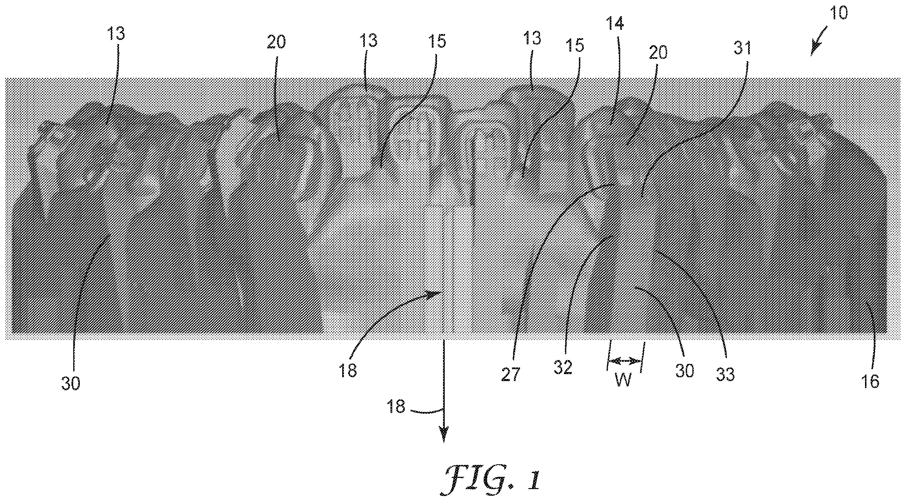

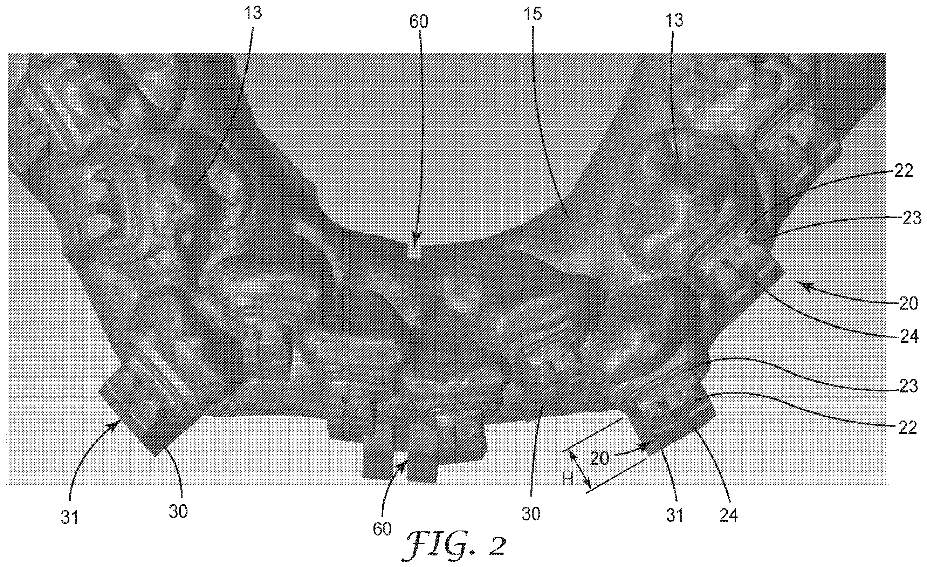

Figs. 1-2 show a physical mockup 10 representing a shape composed of the positive shape of a patient's dental arch 12 including a plurality of teeth 13 and gingiva 14, the positive shape of a set of appliance analogs 20 (for the sake of clarity not each of the analogs or teeth shown is referenced by a reference line in the Figures), and ramps 30 extending in a generally gingival direction from the analogs 20. The exemplary mockups 10 shown in the drawings is a patient's lower dental arch, although it should be understood the the methods of the present disclosure are equally suitable for the patient's upper dental arch. The mockup includes a support body (i.e., mold body) 15 extending below the gingiva 14 to provide stability for improved ease of mockup creation and subsequent transfer apparatus manufacturing. The mockup 10 further includes a midline channel 60 on one or both of the lingual and labial surfaces of support body 15, which can be used to assist placement of a transfer apparatus derived from the physical mockup 10.

The analogs 20 represent or approximate orthodontic appliances (typically, but not exclusively, orthodontic brackets) as they are used, in combination with an archwire, to move a patient's teeth 13 from a malocclusion toward a desired position. In the physical mockup 10 the patient's teeth 13 are represented in the malocclusion at the beginning of either treatment or a new stage of treatment. Alternatively (though not shown), the physical mockup may include only a portion of the dental arch (for example, an arch quadrant or a single tooth) in instances where a transfer apparatus is to be used to bond appliances to only a portion of the patient's dental arch.

The physical mockup 10 may be used for physically shaping a transfer apparatus (not shown in these Figures) for bonding appliances at predetermined positions on a patient's teeth. The transfer apparatus forms a negative replica of at least part of the physical mockup 10. Such a transfer apparatus may for example be obtained from taking an impression from the physical mockup 10, from overmolding the physical mockup 10 or from another technique in which the positive physical model 10 is used for, preferably directly, shaping a negative replica. The physical mockup 10 is preferably configured to provide predetermined undercuts which on the one hand allow orthodontic appliances to be retained or secured within the transfer apparatus but on the other hand facilitates a removal of the transfer apparatus from the physical mockup 10 or the patient's teeth without destroying the transfer apparatus or debonding the appliance from the patient's tooth.

Orthodontic brackets often include defined undercuts of a size and shape that could hamper or block nondestructive removal of the transfer apparatus, so the appliances are represented in the physical mockup 10 by an analog 20 which may not form exact replicas of an appliance to be bonded but just approximate the appliance shape to control undercuts toward a desired level. It is however noted that an appliance may be represented by an analog forming an exact replica of that appliance (at least in regions not coupled to or integral with a ramp 30), whereas a bracket forming an undesired undercut may be represented by an analog having an approximate shape of such bracket. Accordingly, a transfer apparatus replicated from the physical mockup preferably obtains a shape having the level of undercuts allowing for retaining the brackets and for nondestructive removal of the tray from the patent's teeth.

The appliance analog 20 includes an appliance body 22, base 23 adjacent the tooth surface, and an archwire slot 24 extending generally mesiodistally across the body 22. The archwire slot 24 in the appliance analog 20 does not represent the typical facial-lingual depth of the actual archwire slot on a given appliance, instead reflecting a reduced depth to manage undercuts. The appliance body further includes protrusions 26 positioned on both the occlusal and gingival sides of the archwire slot 24, each represent the facial surface of a tie-wing. Other bracket features not depicted, such as hooks, self-ligating mechanisms like clips or doors, and the like may also be at least partially represented in the analog 20.

The ramps 30 extend from the body 22 of the appliance analog in a direction towards the gingiva 15. Each ramp 30 has a height "H", measured from the outer face 31 to the tooth surface 14 and a mesial-distal width "W". The height "H" is generally shorter than the buccolabial height of the analog (including base 21 and body 22) is areas proximate the gingival edge region 27 of the analog 20. In certain embodiments, the height "H" may increase or remain constant over a portion of the ramp length. In presently preferred embodiments, however, the height "H" tapers over a least a portion of the ramp length, leading to a ramp that is taller adjacent the bracket than the gingiva 15 or support body 16.

The mesial-distal width "W" of the ramp is typically commensurate with the mesial-distal width of the analog appliance body 22, including any support structures or ligating mechanisms (e.g., clips) on the mesial and distal ends of the archwire slot. In other embodiments, the ramp may have a smaller or greater mesial-distal width "W" as compared to the mesial-distal width of the appliance body 22. Though not depicted, the width "W" may also increase or decrease in dimension along the length of the ramp 30. In presently preferred implementations, the width "W" is no greater than the mesial distal width of the appliance, as this tends to prevent the bracket from slipping out of its corresponding receptacle in the transfer apparatus and can provide visual feedback during the process of loading the appliance in the transfer apparatus.

The outer face 31 and side edges 32, 33 of the ramps 30 depicted in Figs 1, 2, and 3A-B are each essentially planar, providing the ramp 30 with a generally rectangular shape in a cross-section taken along a plane parallel to the archwire slot and/or perpendicular to the vertical axis 18. In other embodiments, the ramps may have any suitable cross-sectional shape or combination of shapes (e.g., trapezoidal, dome-shaped, etc.) For instance, the outer suface 31 may be rounded, with a planar side surfaces 32, 33 to aid in removal of a subsequently formed transfer apparatus. Each ramp 30 on the mockup 10 may each have the same or different cross-sectional shape. In other embodiments, certain groups of ramps 30 may share the same cross-sectional shape amongst each other, and be different from the cross-secitonal shape of a group situated in a different quadrant or location on the dentition 12.

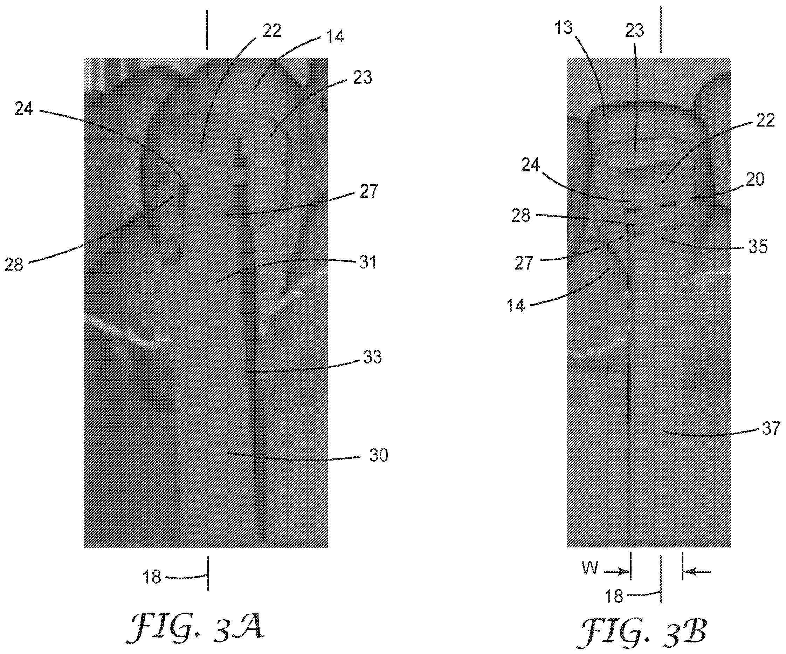

At least a portion of each ramp 30 extends in a gingival direction substantially in parallel with a vertical axis 18 of the physical mockup 10. The vertical axis 18 is perpendicular to the occlusal plane of the dental arch 12, which can be determined using techniques known in the art and further described below. For appliance analogs oriented on a tooth surface with an archwire slot essentially perpendicular to the occlusal plane or y-axis Y of the analog otherwise generally parallel to the vertical axis (Fig. 3A), nearly the entire ramp extends in parallel to the vertical axis 18. If the appliance analog is oriented at an oblique angle relative to the vertical axis 18 (Fig. 3B), the ramp 30 can include a first ramp section 35 extending from the analog 20 in a direction perpendicular to the archwire slot and/or parallel to the y-axis Y of the analog. The first ramp section 35 transitions to a distal, second ramp section 37 extending in parallel with the vertical axis 18. The transition may be angular as depicted in Fig. 3B, arcuate along a single radius of curvature, or including compound curvature. In presently preferred implementations, the first section 35 extends a sufficient distance from the analog body 22 (e.g., 1 mm to 2 mm) to avoid inadvertently removing features on the analog 20 or creating difficulties in loading the resulting transfer apparatus.

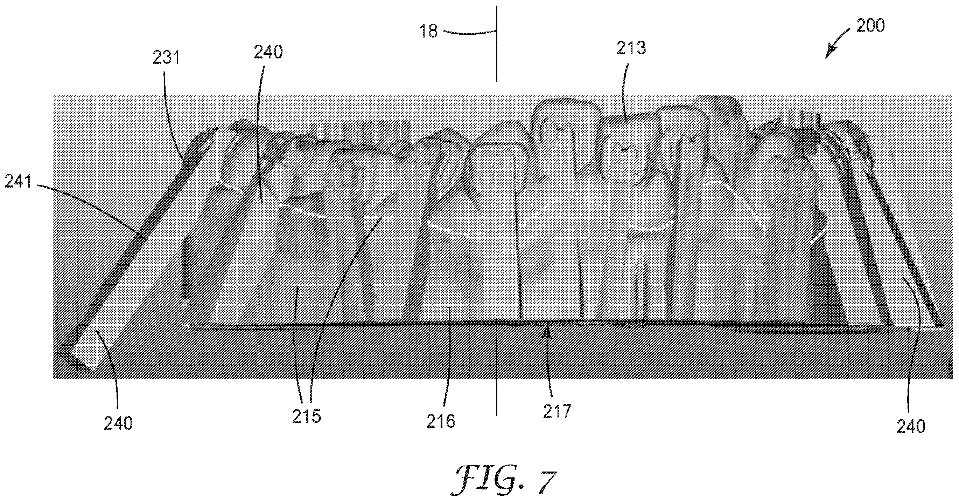

Each ramp 30 is typically integral with the outer surfaces of the physical mockup 10, such that no gap exists between the side edges 32, 33 and the teeth 13, gingiva 14, and support body 15. In other implementations like those depicted in Fig. 7, the ramps 30 extend at least partially in planes offset from the outer surfaces of the physical mockup 10. While such implementations may still be used to create a viable transfer apparatus accordingly to the present disclosure, the resulting physical mockups are generally more difficult to manufacture, require physical removal of material from the mockup to ensure proper transfer apparatus fit, and may be more susceptible to damage.

The physical mockup 10 may be manufactured by additive manufacturing, and thus the dental arch 12, support body 15, analogs 20, and ramps 30 can all be formed in a single piece in the physical mockup 10. The physical mockup 10 can, in such circumstances, be obtained without the need for assembly or attachment of the analog 20 or ramp onto dental arch 12. Accordingly, the position of the analog 20 relative to the dental arch 12 can be determined by computer aid and manual assembly tolerances can be avoided. Examples of suitable additive manufacturing processes include solid freeform fabrication such as 3D printing processes, stereolithography methods, fused deposition modeling, laminated object manufacturing, laser engineered net shaping, selective laser sintering, shape deposition manufacturing, selective laser melting, and solid ground curing.

### Designing the Physical Mockup

The manufacturing of the physical mockup is typically based on a virtual mockup prepared in a computer system. Such a virtual mockup preferably corresponds to a mathematical representation of a three-dimensional shape which can be processed by a computer, for example by a CAD (Computer Aided Design) system. Further the virtual mockup is preferably available in the form of computer data which can be used to control an additive manufacturing machine for manufacturing the physical mockup as defined by the virtual mockup. The virtual mockup may be designed or generated from superimposing or merging a virtual dental arch of a patient with a set of virtual analogs as further described below.

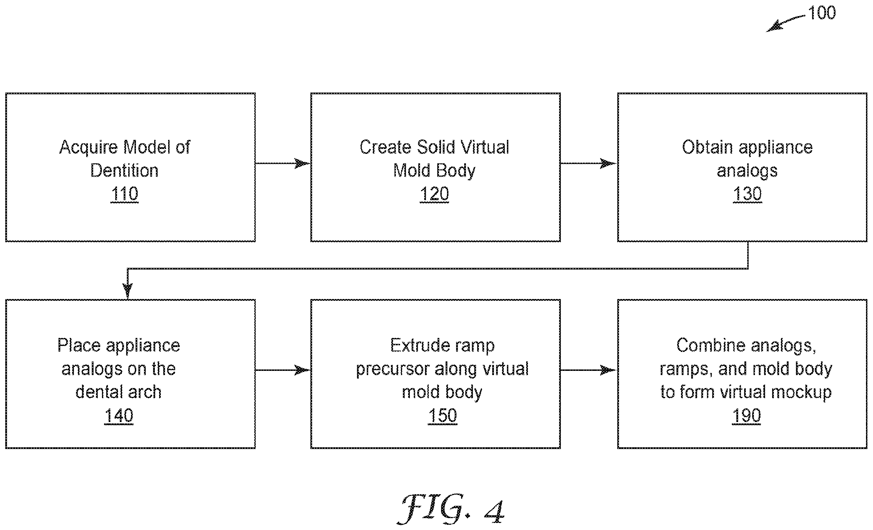

In general, and as depicted in Fig. 4, the process 100 for designing a mockup begins with the acquisition of a virtual model of a patient's dental arch (step 110). The virtual dental arch model may be modified to create a solid virtual mold body (step 120). Appliance analogs (typically virtual bracket analogs) are obtained (step 130) and placed on the teeth at treatment relevant locations (step 140). The appliance analogs may include ramp precursor structures at this stage, or ramp precursors may be added after the analogs are placed on the teeth. The ramp precursor is extruded along the vertical axis of the model in the direction of the gingival edge of the virtual mockup body (step 150). Optionally, the extrusion may occur at a draft angle relative to the body. The analogs, ramps, and virtual arch are then combined to form the complete virtual mockup (step 160). Individual aspects of the process are discussed in further detail below.

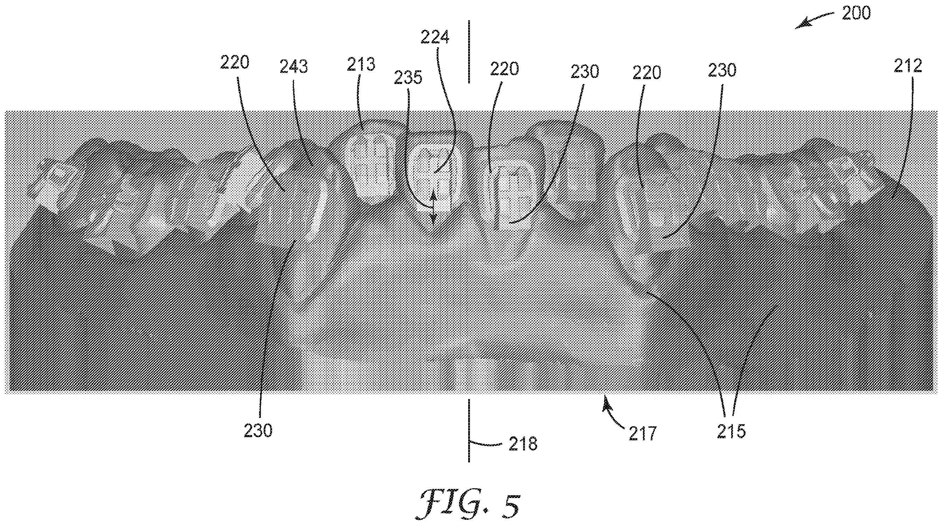

Fig. 5 shows an incomplete virtual mockup 200. The virtual mockup 200 combines the shape of virtual analogs 220 with ramp precursors 230 and the shape of a virtual dental arch 212. The virtual analogs 220, ramp precursor 230 and the virtual dental arch 212 may be obtained from discrete independent virtual parts, or from providing the dental arch 212 and adding the virtual analog 220 to the dental arch 212 by computer aid, for example by additive design or modification of the dental arch. The skilled person will be able to use other techniques as known in the field of Computer Aided Design to provide the virtual mockup 200 and to combine the shapes of the virtual analogs and the virtual dental arch. At various stages, the process can include interaction with a practitioner responsible for the treatment of the patient. Practitioner interaction can be implemented using a client process programmed to receive tooth positions and models, as well as path information from a server computer or process in which other steps of process are implemented. In some or all embodiments, the treatment planning described in Fig. 5 may be embodied within a computer-readable storage medium, such as a computer-readable storage medium of clinician's computing device and/or manufacturer's computer, or both. The computer-readable storage medium stores computer-executable instructions that, when executed, configure a processor to perform the virtual model preparation and treatment planning techniques described below.

As an initial step in creating a virtual model of the patient's dental arch, a mold or a scan of patient's teeth (and potentially mouth tissue) is acquired. This generally involves creating a representation of the patient's teeth and gums, and may involve taking wax bites, using impression materials, casting, direct contact scanning, x-ray imaging, tomographic imaging, sonographic imaging, and other techniques for obtaining information about the position and structure of the teeth, jaws, gums and other orthodontically relevant tissue. A digital data set can be derived from this data that represents a current arrangement of the patient's teeth and other tissues. A virtual model of the dentition may then be re-constructed based on the digital data.

One presently preferred technique for acquiring at least a portion of the initial arrangement (or any subsequent arrangement) is digital scanning. A virtual dental model representing the patient's dental structure can be captured using a digital intraoral scan or by digitally scanning an impression or other physical dental model. Scanning devices which allow for providing a virtual dental arch in digital data form are for example available under the designations Lava^{™} Scan ST and Lava^{™} Chairside Oral Scanner C.O.S, both from 3M Deutschland GmbH. Alternatively, other intra-oral scanners or intra-oral contact probes may be used, such as the True Definition^{™} Scanner, available from Midmark or the TRIOS scanner available from 3Shape A/S. As another option, the digital data file may be obtained by scanning an impression of the patient's teeth. As still another option, the digital data may be obtained by scanning a physical model of the patient's teeth. The model used for scanning may be made by pouring a casting material (such as plaster of Paris or epoxy resin) into an impression of the patient's teeth and allowing the casting material to cure. Any suitable scanning technique may be used for scanning the model, such as X-ray, laser, computed tomography (CT), and magnetic resonance imaging.

The digital data may be "cleansed" by removing any data points that represent clear error. For example, files in STL format representing a tooth surface that include a data point significantly outside the normal expected geometrical relationship of adjacent data points could be fixed by STL-handling software to remove the erroneous data point. In addition, tooth data points that are missing could be added by STL-handling software to create realistic, smoothly curved tooth shapes. Alternatively, or in addition to, the data cleansing may be carried out on the data file before conversion of the data to an STL file. As an additional option, data may also be obtained of hidden features of the patient, such as the roots of the patient's teeth and the jaw structure. For example, CT scanning techniques may be used to obtain data representative of the patient's entire tooth structure including the roots. The data obtained by CT scanning may then be "stitched together" with other data obtained by scanning the crowns of the patient's teeth with another scanning technique to provide a more comprehensive virtual representation.

Dentition surfaces may be segmented to produce one or more discrete, movable 3D tooth object models representing individual teeth. The tooth models may also be separated from the gingiva into separate objects. Segmentation allows a user to characterize and manipulate the teeth arrangement as a set of individual objects. Advantageously, the computer may derive diagnostic information such as arch length, bite setting, interstitial spacing between adjacent teeth, and American Board of Orthodontics (ABO) objective grading from these models.

A tooth coordinate system, defined by coordinate axes, can be defined for each discrete tooth surface in the virtual dental arch. The coordinate system may include a mesial-distal axis, a buccolabial-lingual axis, and an occlusal gingival axis for each tooth, with each axis computed as perpendicular to the other two axes. The coordinate system may be defined using computed or selected landmarks. Alternatively, the coordinate system may be created by defining a point on a virtual tooth, receiving axis input data that defines first and second axes associated with the virtual tooth, computing a substantially normal vector for a portion of the tooth surface surrounding the point, and computing the tooth coordinate system based on the axis input and the computed vector, Such methods, and well as other exemplarly methods for creating tooth coordinate systems, are exemplified in US Patent No. 9,622,835 (Raby et al.). The tooth coordinate system allows for various modifications to one or more virtual teeth associated with the coordinate system. Aspects that may be adjusted or modified for each tooth include: torque, tip, 1^{st} order rotation, mesial-distal movement (with or without interproximal reduction (IPR)), occlusal-gingival translation, and buccolabial-lingual translation. Each of these aspects relate to movement in one of the six degrees of freedom defined by the coordinate axes of the respective tooth surface. Such modification also includes the positioning and/or attachment of an virtual analog to a tooth.

One or both of the occlusal and midsagittal planes of the dentition may be specified for the virtual model. The occlusal plane is an imaginary surface that passes through the occlusion of the teeth and is generally approximated by a plane. The midsagittal plane is an imaginary plane passing longitudinally through the middle of the dental arch, dividing it into left and right halves. An initial approximation of the occlusal plane may be based on the shapes or coordinate systems of some or all of the tooth surfaces belonging to an individual arch of the dentition 212. For example, the occlusal plane may be defined by identifying three points that tangentially contact a plane superimposed on the dentition 212. For a given dental arch, the three points generally include at least one contact point from a left molar, one contact point from a right molar, and one contact point from a central or lateral tooth. In another embodiment, the occlusal plane is defined as a best-fit plane to the points representing the origins of the tooth coordinate systems, as previously defined. In effect, this plane represents the average of these origins, which are generally positioned at the incisal edges, single cusp tips, or buccal cusp tips of the teeth. The occlusal plane may also be used to calculate and define the vertical axis of the model. The vertical axis resides in a plane perpendicular to occlusal plane and can be used to gauge the orientation of analogs on the tooth and control the orientation of ramps 230.

Similarly, the midsagittal plane may be derived based on the shape of the archform according to the coordinate systems of the tooth surfaces of the dentition 212. Manual adjustments of the occlusal and midsagittal planes to the locations and/or orientations relative to the dentition surface can be made as desired

Area below the teeth and/or gingiva may be extruded to a planar surface to create the virtual support body 216. Typically, the extrusion is performed along a path generally normal to the occlusal plane to a common plane spaced about 2 to about 30 mm from the either the occlusal plane or the gingival most point on the model before creation of the support body, as desired. The creation of the support body may be accomplished before or after the virtual analogs have been placed on the arch, but preferably before the creation of complete ramps.

Optionally, and once the initial data set is processed and before appliances are placed on the virtual arch, the desired positions of the teeth in the patient's dental arch may be determined. Desired final positions of the teeth can be received, e.g., from a practitioner in the form of a descriptive prescription, can be calculated using orthodontic prescriptions, or can be extrapolated computationally from a clinical prescription. With a specification of the desired final positions of the teeth and a digital representation of the teeth themselves, the final position and surface geometry of each tooth can be specified to form a complete model of the teeth at the desired end of treatment or treatment stage. The result of this step is a set of digital data structures that represents a desired and/or orthodontically correct repositioning of the modeled teeth relative to presumed-stable tissue. Further details on software and processes that may be used to derive the final position are disclosed, e.g., in U.S. Patent. Nos. 6,739,870 (Lai, et al.), 8,194,067, 7,291,011, 7,354,268, 7,869,983, and 7,726,968 (Raby, et al.). In some implementations, the desired final positions of the teeth may be determined by the placement and/or orientation of the appliances, as described below.

The methods of creating a mockup next proceeds to the step of obtaining and positioning the virtual appliances relative to the virtual dental arch. Though discussion proceeds on the basis of the virtual appliance being a virtual bracket, one skilled in the art will understand that other virtual appliances suitable for bonding to the surfaces of the teeth (e.g., attachments, molar tubes, buttons, cleats, sheaths, etc.) may be used to create analogs for coupling to the virtual dental arch.

A variety of treatment planning systems exist which allow for designing and/or placing virtual appliances relative to a virtual dental arch with computer aid. Such systems are, for example, described in US Patent Nos. 7,210,929 (Raby et al.), 7,811,087 (Wiechmann et al.), and 7,993,133 (Cinader et al.). The virtual brackets may be at least partially designed and/or retrieved from a database. Each bracket or analog may be automatically and/or manually positioned relative to a virtual tooth in the virtual dental arch. Examples of systems for automatically placing and/or adjusting virtual appliances are described in U.S. Patent Nos. 7,210,929 (Raby, et al.), 7,940,258 (Raby et al.) and 8,517,727 (Raby, et al.).

The desired locations for the bracket/analog on the model can be determined in any of a number of ways. For example, a user at an appliance manufacturer's facility may use modeling software to place analogs/appliances on a model of the patient's dental arch based on standards or guidelines from an orthodontic treatment philosophy. These standards or guidelines for appliance placement may be specific to each tooth in the model and may, for instance, call out the position of the archwire slot with respect to the clinical crown of each tooth. A user may also place brackets/analogs in accordance with particular instructions provided by a different treating professional. Each bracket and each tooth may be manipulated as a separate object within the virtual environment and fixed in the position of each bracket within the environment relative to the coordinate system associated with the tooth of the corresponding bracket. The virtual brackets can be connected to a virtual archwire, and the final positions of the teeth may be computed based on the positions of the brackets and the selected archwire. Assuming the final positions meet with approval, the virtual analogs may be placed at locations corresponding to the virtual brackets. As an alternative to moving appliances, a user may instead define the desired positions of teeth as described above, and the computer may include programming instructions to determine the suitable locations to place the appliances in order to move the teeth to those desired positions. Examples of virtual orthodontic treatment in this manner are disclosed in issued U.S. Patent Nos. 6,739,869 (Kopelman et al) and 7,354,268 (Raby et al.).

If the user or other professional is not entirely satisfied with the final predicted positions of the teeth, new final positions of the virtual teeth may be computed and displayed based on revised positions of either the virtual appliances or the virtual teeth. These steps can be repeated as many times as desired until all parties are satisfied. Data representing the selected positions of the appliances, along with identification data for each appliance (such as brand name and the manufacturer's part number), tooth identification data (such as tooth type and location in the oral cavity) and patient data (such as name and birth date, or a patient identification number) can be recorded for further processing.

In the exemplary implementation, the virtual analog is obtained based on (for example by modification of) a virtual bracket. In the exemplary embodiment, the virtual bracket is a labial bracket, which typically is standardized by prescription and available "off-the-shelf". The person skilled in the art will however recognize that the present methods and systems may likewise be used in combination with lingual and labial brackets, including brackets that may be customized for each tooth of each patient, or a combination of custom and standard brackets. In one implementation, virtual brackets are selected from a library of pre-existing bracket constructions; such bracket constructions may feature a standard or semi-custom bonding pad merged/combined with a bracket body. Such fully-constructed appliances can be stored and accessible as CAD or STL files, for example. The appliance data can be either scanned in using above-described scanning technologies or generated directly with 3D data from published appliance profiles or other manufacturing specifications.

An exemplary possibility for providing a virtual bracket with a customized pad is disclosed in US Patent 7,811,087 (Wiechmann et al.). The bracket design may be performed on a computer that stores a three-dimensional virtual dental arch of a patient. The shape of the patient's dental arch, comprising the shape of the teeth and their position relative to each other, can be provided in the form of a computer processable representation (e.g., digital data file). A tooth facing pad geometry (i.e., bonding surface) may be derived directly from tooth geometries represented in the virtual dental arch so that the pad obtains a three-dimensional surface which substantially exactly matches with the corresponding tooth surface. The term "substantially exactly" in this regard means that the surfaces are identical except for the eventual presence of tolerance deviations that may result from making the pad. This allows for a relatively precise placement of the bracket on the tooth and helps in maximizing the bonding strength.

Another part of the appliance, the bracket body, containing a slot for receiving an archwire and further features (e.g., hooks, tie-wings, grooves, etc.) that allow fastening the wire into the slot, may be available on the computer as predefined virtual models, for example in the form of a library of bracket bodies. To provide a virtual set of brackets for the virtual dental arch certain predefined virtual bodies may be selected. The virtual bodies are typically aligned with their slots relative to each other, for example such that a generally U-shaped virtual archwire can run through the slots of all brackets. Once the slot positions of the bracket bodies have been determined, the bracket bodies and the respective bracket pads may be combined, for example virtually merged to form the set of virtual brackets. Common CAD programs have capabilities (for example Boolean operations) to connect existing shapes to each other. Optionally the design of the virtual brackets, or parts of the brackets, may be adapted to account for a good articulation, hygiene requirements or other aspects as needed.

The virtual brackets are used to generate the set of analogs based thereon. Each analog of the set of analogs is associated with a virtual bracket of the virtual set of brackets, and in certain cases represents a modification thereof. In one embodiment, a modification step comprises increasing a three-dimensional volume represented by the virtual appliance by selectively modifying only a portion of the appliance. For example, the modification step may comprise a flattening or reduction of an indentation present in the appliance shape. The modification step may further comprise at least partially filling a space between portions of the bracket shape or adding a virtual structure to the appliance shape. Undercuts, which may otherwise hinder the placement of the brackets into the tray or eventually prevent a transfer tray from being removed, may be minimized or removed. Further the modification step may comprise optionally reducing the three-dimensional volume by selectively modifying another portion of the bracket. For example, the modification step may comprise a rounding of an edge to account for abrasion of a physical bracket during a surface treatment step (for example during deflashing or polishing). Further the modification step may comprise maintaining or substantially of at least a portion of the original virtual bracket shape. The shape of each virtual analog may substantially correspond at least partially to the shape of one virtual brackets of the virtual set of brackets. The person skilled in the art will recognize various possibilities for modifying a shape, for example by change of an existing shape, adding or removing a shape, virtually copying, cutting, extending, reducing or another suitable technique. The skilled person will further be able to create a set of analogs in any suitable manner, for example by functions available on a CAD system, to provide a set of analogs in which the shape of at least one of the analogs differs from the shape of the associated appliance.

Relative to the shape of the bracket, the shape of the analog is adapted to facilitate a removal of a transfer apparatus which is made based on that analog shape. As mentioned above one or more of the virtual analogs may substantially exactly correspond in shape to the shape of the virtual bracket, although in most cases the shape of virtual analogs and the shape of the virtual brackets may differ at least in areas comprising undercuts.

Appliance analogs may be stored as rendered in an accessible library or generated subsequent to retrieval based on an intended location of the appliance on the dental arch.

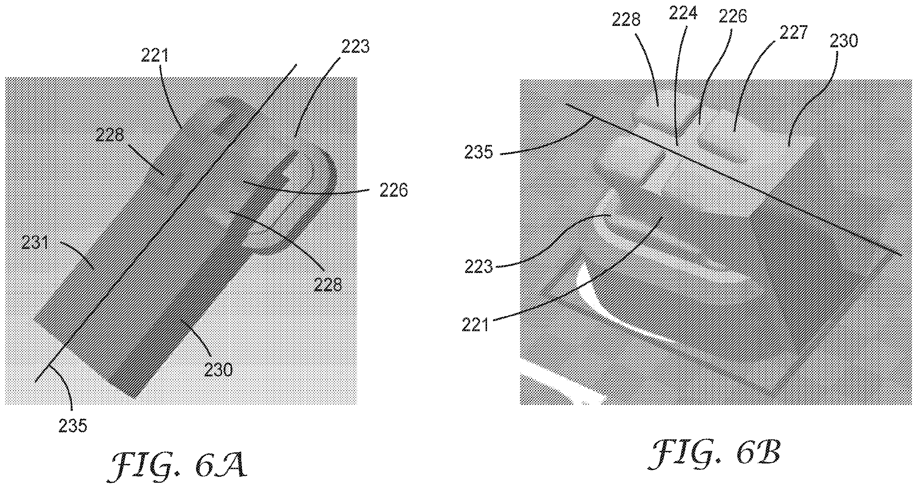

Creation of the virtual analogs may further include the addition of a ramp precursor to either a virtual analog body or an otherwise unmodified virtual bracket body (e.g., a bracket that has not undergone any other shape adjustments). The ramp precursor 230, depicted in Figs. 6A and 6B as coupled to analog 220 with at least partially filled in archwire slot undercuts, extends a relatively short distance (e.g., 1 - 2 mm) beyond the bracket body 220 toward the gingiva 215 along a long axis 235. The long axis 235 is generally occlusal-gingival and oriented perpendicular to a mesial-distal axis of the archwire slot 224.

The ramp precursor 230 of Figs. 6A and 6B fills in a least a portion of the available space between the gingival tie-wings 228 on body 221 and the analog base 223 and extends the entire mesial-distal width of the analog body 221. The precursor 230 has a height "H" adjacent the analog body 221 less than the total height of the analog 220 as measured from the tooth facing surface of the base 223 to the facial surface of the body 221, allowing a portion of the tie wings 228 protrude above the ramp precursor's outer surface 231. The protruding features allow a receptacle formed from the model to gain improved registration with facial features of a corresponding bracket, as well as indicating the proper orientation of the bracket to one loading the transfer apparatus.

The ramp precursor 230 of Fig. 6A includes a planar outer surface 231 extending in a plane generally parallel to a bottom wall 226 of the archwire slot 224 and a plane tangent to the center of the base 223 where the base 223 is designed to contact the tooth surface. For certain bracket prescriptions (not shown), the bottom wall of the slot will be canted or substantially perpendicular to the base tangent plane (i.e., a vertical slot), and the precursor will typically extend parallel to the plane tangent the center of the base and not the bottom wall. The canted ramp precursor 230 of Fig. 6B extends outwardly from the analog body 220 at an incline relative to the analog base 223 and the bottom wall 226. The ramp precursor 230 of Fig. 6B tends to provide greater clearance between the transfer apparatus and the tooth surface when used in a corresponding physical mockup.

The virtual ramp precursor 230 may exist as a solid body (Fig. 6A) or as a hollow, open contour (Fig. 6B). The use of an open contour can allow for enhanced identification of surfaces for extrusion when extending the ramp precursor towards the gingival edge of the support body 216, as further described below.

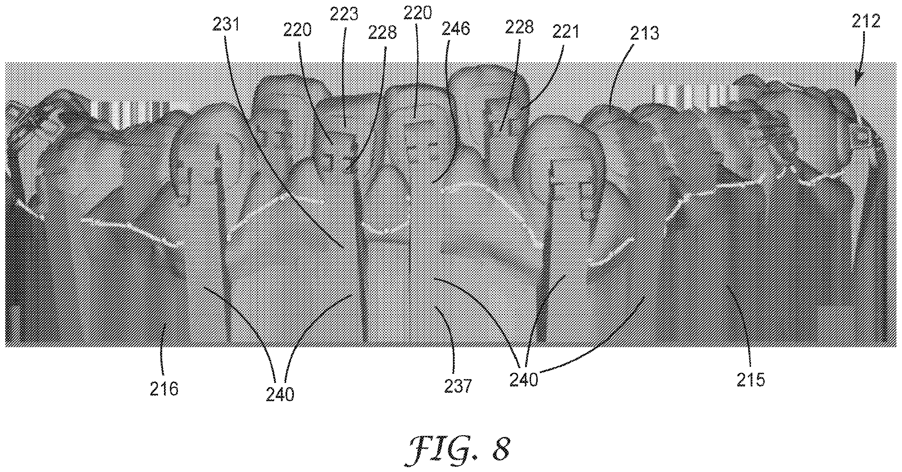

Turning back to Fig. 5, a virtual dental arch 212 is depicted with finalized virtual analog 220 locations on labial tooth surfaces 213. The ramp precursors 230 are located in generally gingival location relative to the analog body 220 and archwire slot 224. Once the virtual analogs 220 are satisfactorily placed on the arch, the ramp precursors 230 may be extruded in a generally gingival direction along the vertical axis 218 to the gingival edge 217 of the support body 216. Extruding the ramps precursors along the vertical axis prevents interference between neighboring ramps, making the physical mockup easier to manufacture without substantial, further modifications to the virtual mockup. For ramp precursors 230 oriented generally parallel to the vertical axis 218 after the placement step, the extrusion occurs in direction parallel to the long axis 235 of the existing ramp precursor 230. If the long axis 235 of the ramp precursor 230 is oriented at an oblique angle relative to the vertical axis 218, the ramp precursor 230 transitions to a distal, second ramp section 237 that is extruded in parallel with the vertical axis 218 (see Fig. 8). The transition may be angular, arcuate along a single radius of curvature, or including compound curvature.

In other embodiments, the ramp precursor may be extruded along the long axis of a given virtual tooth, which may or may not be aligned with the vertical axis of the model. Alternatively, one edge of the ramp may be extruded along the long axis, and the other along the vertical axis. Such a ramp may taper or expand in width as the gingival edge of the support body is approached and may be suitable for certain bracket placements canted at angle relative to the occlusal plane.

The extrusion of the ramp precursor 230 towards the gingival edge 217 of the support body 216 creates block out ramps 240, depicted in Figs. 7 and 8. Extrusion can occur primarily in the plane defined by the outer surface 231 of the ramp precursor, as depicted in Fig. 7. Depending on the orientation of the teeth in the patient's arch, some of the resulting extruded ramps may be facially offset from the support body 216, potentially leaving a gap between a section of the ramp and the model when fabricated as a physical mockup. Manufacturing physical versions of such ramps, particularly through additive manufacturing, can be difficult, as the ramp requires excess material to create and support relative to the remainder of the dentition model. Moreover, the geometry of such ramps can make a transfer apparatus formed over the mockup difficult to remove and use for subsequent appliance seating. These concerns may be mitigated by removing ramp material from the virtual mockup or the physical model but doing so adds complications to the process.

In presently preferred implementations, and as shown in Fig. 8, the ramps 240 are extruded from ramp precursors at draft angle relative to the support body 216, such that the ramp height tapers as it reaches the gingival edge 217. In one exemplary embodiment, the draft angle is about 10 degrees towards the support body 216. In other embodiments features different orientations of the patient's dentition, the draft angle may be substantially greater or smaller. Alternatively, a portion of the ramp can be virtually removed.

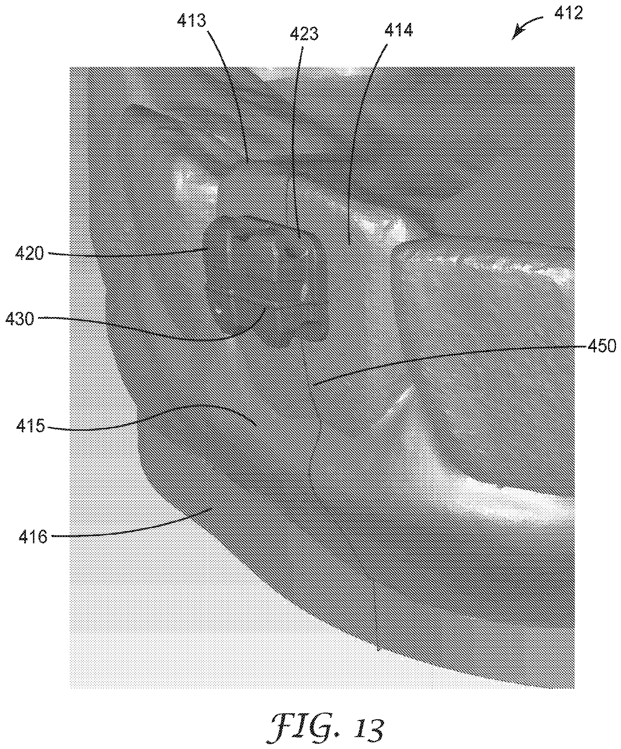

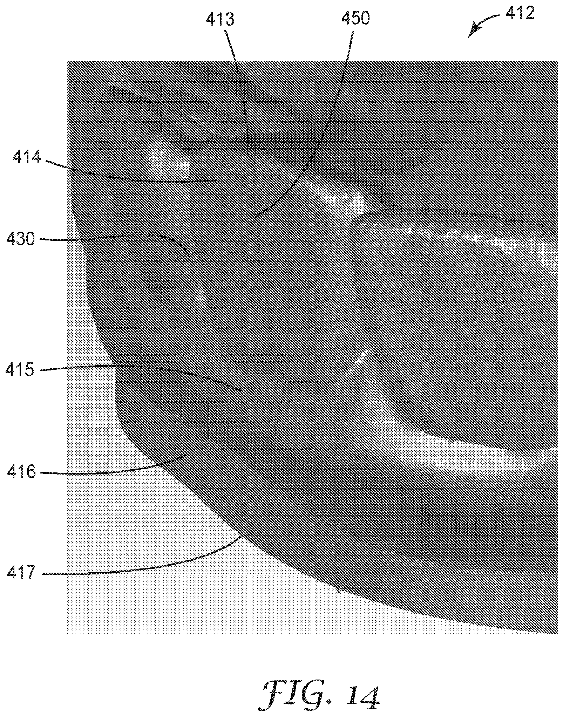

In other implementations, the ramp can be extruded such that the outer surfaces shares or approximates the contour of the virtual dentition. Such extrusion may occur from a ramp precursor or direct from a virtual bracket or bracket analog. In one embodiment demonstrated in Figs. 13-15, a bracket cross-section 430 can be extruded along the Facial Axis of the Clinical Crown (FACC), which is commonly defined as the curved line formed by the intersection of the mid-sagittal plane and the facial surface of the tooth. A suitable extrusion sweep path 450 follows the FACC and the model contour. The bracket cross-section 430 can be taken along a mesial-distal plane tangent the center of the bracket base 423 in contact with the tooth surface 413. As best shown in Fig. 14, the bracket cross-section 430 is generally rectangular and at least approximates the exterior shape of the virtual bracket 420 or bracket analog. Alternatively, the bracket cross-section may be approximated by creating a generally rectangular offset shell with the same facial-lingual and mesial-distal dimensions as the bracket body 422. Yet another way to generate a starting area for an extrusion path could include projecting a rectangle disposed gingivally of the bracket onto the bonding surface 414 the virtual tooth 413 (having the same width as the bracket and a height determined by the distance between the model base and bracket), selecting triangles on the tooth 413 within the projected area, and extrude the triangles normal to the tooth 413/model 412 surface 413 by a distance equal to a facial-lingual dimension of the bracket.

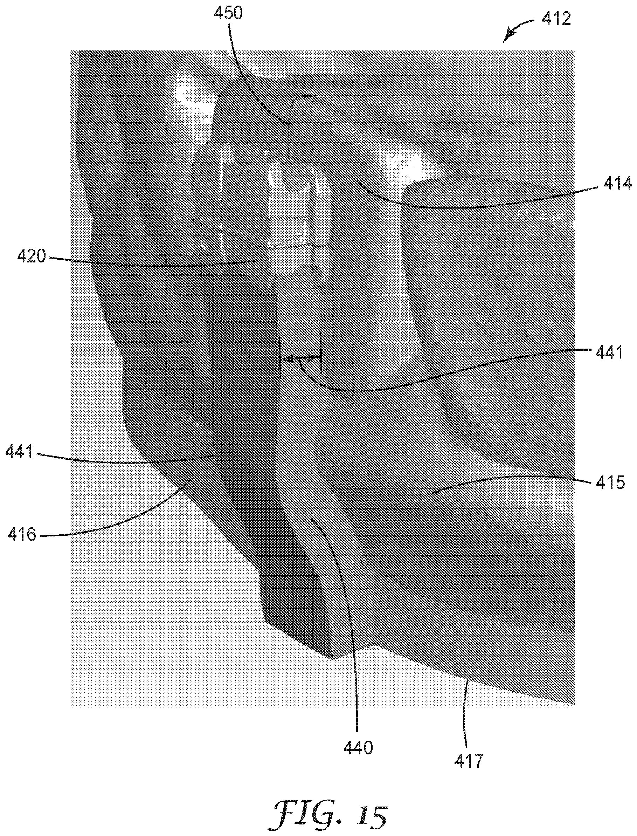

The cross-section 430, or other extrusion path origin, can then be swept along sweep path 450 to the bottom edge 417 of the virtual dentition model 410. As shown in Fig. 15, such an extrusion creates a ramp 440 with an undulating outer surface 431 having a contour generally matching the surfaces of corresponding area of the virtual dentition model. The facial-lingual height 442 of ramp 440 varies over its length, but is generally smaller adjacent the gingiva 415. In other implementations (not shown) the undulating ramp may be tapered in height as the bottom edge is approached by, for example, removing portions of the ramp at a predetermined draft angle or modifying the sweep path to a particular slope as the bottom edge is approached.

A virtual mockup may be provided by combining the virtual dental arch and the set of virtual analogs, for example being merged or superimposed by computer aid. The virtual mockup, which is preferably present in the form of a computer processable three-dimensional data file may be transmitted to an additive manufacturing machine which manufactures the physical mockup based on the virtual mockup. Suitable additive manufacturing processes include solid freeform fabrication such as 3D printing processes, stereolithography methods, fused deposition modeling, laminated object manufacturing, laser engineered net shaping, selective laser sintering, shape deposition manufacturing, selective laser melting, and solid ground curing. Automated or semi-automated manufacturing of physical mockup may also or alternatively include injection molding, lost wax casting, 5-axis milling, laser cutting and other manufacturing techniques. Alternatively, though not presently preferred, the components of the virtual mockup may be transmitted to the additive manufacturing machine and created separately, with a technician responsible for placement and coupling of the physical analog(s) to the physical dental arch. Such a method may rely on guides or other devices created on the physical arch to assist in analog placement, such as those described in US Patent Nos. 7,762,815 (Cinader et al.) and 8,235,717 (Kuperman). Analogs may be held in place during formation of the placement device, for example, by a temporary adhesive or by friction fit with the guides as described, for example, in U.S. Patent 7,762,815. In particular, the physical model may be created with ramps serving as placement guides in the absence of manufactured analogs, with physical brackets registered with one or more surfaces of the ramps.

The physical mockup can be made of a light curable material but may in other examples be made of a plastic material (for example molten from a plastic fiber), metal, gypsum, cement or other chemically hardenable materials. Manufacturing may further include post-processing to remove uncured resin and remove support structures, or to assemble various components.

### Creating a Transfer Apparatus

Once the physical mockup is generated to satisfaction, a transfer apparatus may be created over said mockup. This may include sending instructions to a pressure forming or thermoforming machine to cause one or more sheets of material to be pressure formed or thermoformed over the physical mock up to form a negative replica or shell. The sheet may be, for example, a sheet of deformable plastic (e.g., an elastic thermoplastic). The sheet of material may be heated to a temperature at which the sheet becomes pliable. Pressure may concurrently be applied to the sheet to form sheet around the mockup. Once the sheet cools, it will have a shape that conforms to the mockup. An interior shape of the plastic shell substantially conforms to the patient's current dental arch. A release agent can be applied to the mockup before forming the plastic shell to facilitate later removal of the mold from the plastic shell. The shell can be trimmed by laser or mechanical milling techniques to remove excess or unwanted material.

One exemplary method of making a tray includes the use of multiple sheet materials as described in US Patent No. 10,368,961 (Paehl et al.). The method includes placing elastic sheeting on top of the occlusal side of the teeth represented by the physical mockup, with a plastic sheeting arranged on top of the elastic sheeting. The elastic sheeting and the plastic sheeting are deformed in directions toward the physical mockup. This may be achieved by a vacuum generated beneath the elastic and plastic sheeting or a pressure above the elastic and plastic sheeting. At least the plastic sheeting maybe heated before and/or during the deformation. The plastic sheeting is typically allowed to solidify by cooling so as to provide it with a sufficient rigidity for handling.

The elastic sheeting may be made of a material selected from among dental impression materials or other molding materials, preferably having a shore hardness of about 20 Shore A after hardening, and may have a thickness within a range of about 2 to about 5 mm. The elastic sheeting preferably has a size (or area) that is suitable to embrace the at least part of the labial sides, the occlusal sides and at least part of the lingual sides of the teeth represented in the physical mockup. Further the elastic sheeting may be sized to embrace the entire physical mockup, multiple physical mockups, or portions thereof. The elastic sheeting 34 may be sized to cover at least a footprint of one or more physical mockups in a plane approximately parallel to the occlusal sides of the teeth in the mockup.

Plastic sheeting is typically plastically, for example thermoplastically, deformable. The plastic sheeting 35 may be made of Duran^{®} polyethylenterephthalate-glycol copolyester, available from Scheu Dental, Germany, or Essix ACE from Dentsply Sirona, and may have a thickness within a range of about 0.75 to about 3.0 mm. Other suitable plastically deformable materials include polycarbonate such as Makrolon brand material from Bayer or Lexan brand material from General Electric. The plastic sheeting may have a size (or area) that corresponds to the size of the elastic sheeting, but typically has a larger size.

In another example (not shown) instead of an elastic sheeting a space coat may be used. Such a space coat may be obtained from applying a hardenable liquid or pasty material over the physical mockup and allowing the material to solidify. This may be performed by dip coating, or manual coating using a dispensing syringe or brush. In the solidified state the coating material is preferably elastic or brittle such that it can be removed from the physical mockup at a later stage, or may be dissolved. A plastic sheeting may be deformed over the coated mockup as described above.

The plastic sheeting, after deformation, may have a generally trough-shaped indentation or cavity which approximates a three-dimensionally proportionally enlarged shape of the teeth (including the analogs and ramps) represented in the physical mockup.

In one embodiment the transfer apparatus replicates the negative shape of only part of the physical mockup, for example the shape of only one analog/ramp and the shape of at least part of a tooth in the dental arch. A partial transfer apparatus may for example allow for rebonding or replacing a bracket in a patient's mouth. A typically clear, hardenable material is then received within the cavity of the plastic sheeting. Exemplary hardenable materials include: Kanisil ^{®}, a silicon carbide containing alloy (available from Heinrich Schnarr GmbH, Germany); Odontosil^{™}, an addition-vulcanising silicone available from Dreve Dentamid GmbH, Germany; and Memosil 2 brand vinyl polysiloxane material from Heraeus Kulzer Inc. In certain implementations, the mockup may be mated with the deformed plastic sheeting so as to enclose the hardenable material between the mockup and the sheeting. The amount of the hardenable material is preferably selected such that during mating of the mockup and the sheeting the hardenable material flows around (typically to embed relevant parts of) the teeth and analogs represented in the mockup. The mated mockup, hardenable material and sheeting may be exposed to a vacuum or pressure, for example by use of an autoclave or pressure chamber, in order to minimize voids or bubbles between the teeth and the hardenable material. The hardenable material may subsequently be allowed to harden or may be cured. The hardened flowable material is preferably elastic and has a shore hardness of between about 50 shore A and 70 shore A, preferably about 60 Shore A. The hardened flowable material and the deformed plastic sheeting cooperate to form the transfer tray.

Alternatively, the physical mockup can be mated with the plastic sheeting and dipped into the hardenable material, which is distributed between the outer surface of the physical mockup and the inner surface of the cavity. The hardenable material is allowed to harden to provide a positioning layer for the appliances.

Under presently preferred circumstances, the positioning layer is adapted such that it can position and retain the bracket and further such that it is deformable for receiving brackets therein and removing brackets therefrom. Accordingly, the positioning layer may be made of a relatively elastic and soft material (when solidified). When deployed in combination, the plastic sheeting which preferably provides the tray with the required mechanical stiffness and stability, and the positioning layer which preferably provides the transfer tray with a series of receptacles in which the bracket can be precisely and removably retained. The positioning layer approximately corresponds in shape with the shape of the elastic sheeting described above, however is typically made of a different material.

Optionally, the transfer tray may be created having an occlusal stop member, as described in US Patent No. 7,845,938 (Cinader et al.). An occlusal stop member typically includes a flat top surface and a bottom surface with shapes such as recesses that match the shapes of the occlusal tips of the patient's dental arch. In certain implementations, the occlusal stop member has a recess or recesses corresponding to only some of the teeth in the dental arch, although it is also possible to construct an occlusal stop member that has one or more recesses corresponding to each tooth of the dental arch. Other variations are also possible. For example, the occlusal stop member may extend only along a portion of the dental arch instead of along the entire dental arch. A plurality of stop members may be provided, potentially spaced apart from each other and optionally connected. The occlusal stop member may be chemically or mechanically bonded to the plastic sheeting and/or the hardenable material.

It should be appreciated that the transfer tray may be formed only of one or more layers of deformable plastic sheeting, without accompanying elastic sheeting or positioning layer. In such implementations, the plastic sheeting may be disposed directly proximate the occlusal surface of the physical mockup, without the spacing provided by elastic sheeting. The plastic sheeting accordingly directly embraces the teeth and bracket analogs of the physical mockup upon deformation, directly creating the bracket receptacles used to removably retain brackets for subsequent bonding. In such streamlined transfer tray embodiments, the physical mockup may be coated with a release agent to assist in removal of the transfer tray from the mockup. Pursuant to typical methods used to create the transfer tray, the resulting tray represents a negative replica of at least a portion of the physical mockup.

As another alternative, a virtual transfer tray may be directly derived from the virtual mockup, using methods described in US Patent No. 9,763,750 (Kim et al.). In one exemplar of such a method, the derivation can proceed by defining a guidance line that extends across at least a portion of the arch and is spaced away from the arch and mounted analogs. For example, the guidance line follows a curved path that is generally parallel to the facial surfaces of the virtual analogs and generally lies in an occlusal plane. In one computer-assisted embodiment, the guidance lines are defined by tracing a line segment that connects the facial-most edges of analogs as viewed from the occlusal direction, offsetting the line segment outwardly towards the facial direction by a certain distance and then applying a smoothing operation to the line segment. If desired, the certain distance can be used to define a desired tray thickness. The process may continue by defining a series of fitted arcs, each of which extends over the lingual, occlusal, and facial surfaces of the virtual arch model and intersects each guidance line in a generally perpendicular relationship such that each fitted arc passes over, without contacting, the virutal model and virtual analogs.

An exterior surface of the virtual transfer tray may be formed by fitting a surface to the set of fitted arcs. In some embodiments, the exterior surface is an open-ended shell that completely covers the occlusal, lingual, and facial sides of the virtual mockup that includes the model and analogs. Optionally, a surface smoothing operation is subsequently executed on the exterior surface. Then the remainder of a virtual tray body is derived using the exterior surface. The solid virtual tray body may be formed by defining a composite surface that includes the exterior surface and a planar surface that extends across the cavity formed by the exterior surface. When virtually aligned with the virtual mockup, the virtual tray body surrounds both the teeth and analogs. The mockup (including analogs) may then be virtually subtracted from the virtual transfer tray body to produce a virtual tray precursor. Virtual tray precursor includes a tray body which will typically have a shell-like configuration and further includes one or more receptacles formed by the negative virtual imprints of the analogs. The virtual tray precursor, which is preferably present in the form of a computer processable three-dimensional data file may be transmitted to an additive manufacturing machine which manufactures the physical transfer tray based on the virtual tray precursor according to techniques discussed above.

The physical tray manufactured directly from the virtual tray precursor may include a placement layer and a position layer. Alternatively, a mold approximating the deformed plastic sheeting can be additively manufactured and coupled with hardenable material to form a positioning layer, as described above.

In circumstances wherein the analog includes a modified shape relative to the corresponding appliance, the placement of the actual physical bracket in the receptacle 320 creates one or more voids between the appliance body and receptacle surfaces. In addition, defects or tolerable deviations introduced during bracket manufacturing can result in additional voids between the appliance body and a receptacle wall. Excess adhesive on the base of the bracket can flow into or otherwise fill these voids during placement of the bracket on a tooth surface. The adhesive typically demonstrates an affinity for bracket surfaces and is difficult to remove once engaged, deleteriously affecting the bracket function as described above.

A filler material can be introduced into a tray receptacle to protect the voids 39 from excess adhesive while the bracket is bonded to a tooth. In presently preferred circumstances, the filler is a volume constant material; in that it does not lose appreciable volume once it is cured or hardened. Particularly useful volume constant materials include the flowable, hardenable materials used to create positioning layer, such as Odontosil^{™}. Suitable volume constant materials also include wax and other dental impression materials. In other embodiments, the filler material may be expandable foam, which is introduced at a lesser volume and subsequently expanded to fill one or more voids. Materials used for the expandable foam includes polyethylene, polyurethane, silicone, or synthetic rubbers, such as ethylene-propylene diene or block copolymers, such as those based on styrene. Further exemplary details regarding the use of filler material in the methods of the present disclosure may be found in US Patent No. 10,368,961 (Blees et al.).

Regardless of the method of physical transfer apparatus creation, the component layer (s) may be trimmed in size to match with only a part of a patient's dental arch or to make the tray fit conveniently in a patient's mouth.

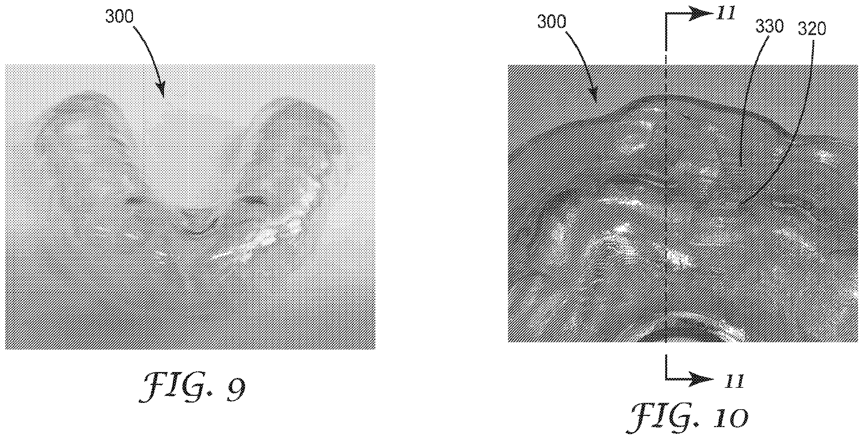

As illustrated in Figures 9-12, the formed transfer apparatus 300 (here, a U-shaped tray) that substantially matches the teeth of the physical mockup and includes a series of receptacles (represented by receptacles 320) that substantially correspond to exterior surfaces of an analog and channels (represented by channel 330) that substantially correspond to exterior surfaces of an associated ramp. The tray 300 as depicted includes an outer layer 305 and an interior, positioning layer 306. The inner wall sections 308 of the inner layer 306 will typically that have contours that match the contours of the individual teeth of the patient, as well as an overall configuration that matches the orientation of each tooth relative to other teeth in the same dental arch. The inner wall sections 308 of the inner layer 306 will contact the labial, occlusal and lingual surfaces of the teeth when seated on the dental arch, though other construction may omit the surfaces that do not include receptacles 320.

Typically, the tray will include a receptacle in the positioning layer 306 corresponding to each appliance analog on the physical mockup and/or virtual mockup used in creating the transfer apparatus, as well as a channel corresponding to each ramp associated with an appliance analog. The channel 330 extends from a generally gingival region 322 of the receptacle 320 to an opening 334 at or adjacent the gingival edge 316 of the tray 310.

The facial wall 331 and side edges of the channels 330 depicted in Figs 9-12 are each essentially planar, providing the channel with a generally rectangular shape in a cross-section taken along a plane parallel to the mesial-distal axis of the receptacle 320. In other embodiments, the channels may have any suitable cross-sectional shape or combination of shapes (e.g., trapezoidal, dome-shaped, etc.) For instance, the facial wall 331 may be rounded, with a planar side surfaces 332, 333 to aid in removal of a subsequently formed transfer apparatus. Each channel 330 in the transfer apparatus may each have the same or different cross-sectional shape. In other embodiments, certain groups of channels 330 may include the same cross-sectional shape amongst each other, and be different from the cross-secitonal shape of a group situated in a different quadrant or location on the transfer apparatus 300.

Each channel 330 of the plurality of channels has a depth "D" measured from the facial wall 331 to the tooth surface 14 when seated on the arch, a mesial-distal width, and a length "L" measured from the channel opening 334 to the most gingival point on the receptacle 320, which is typically but not exclusively a recess corresponding to a tie wing or hook. The depth is generally less than the depth of the receptacle along a similar reference direction. In certain embodiments, the depth may incline or remain constant over a portion of the channel length "L", leaving the depth at the opening 334 potentially deeper than the depth proximate the receptacle. In presently preferred embodiments, however, the depth tapers down over a least a portion of the channel length, leading to a channel 330 that is shallower adjacent the opening 334 at the gingival edge 316 of the transfer apparatus 300 as compared to the region of the channel 330 adjacent the receptacle 320. Though not depicted, the width "W" may also increase or decrease in dimension along the length of the channel 330.

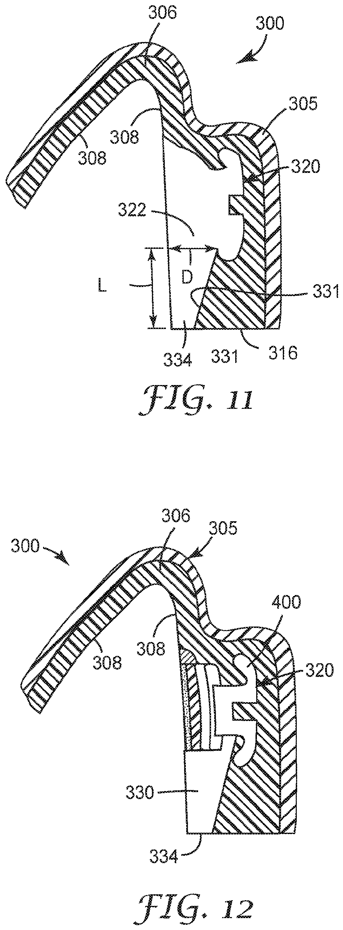

To utilize the transfer apparatus, brackets (represented by bracket 400) are placed in associated receptacles (Fig. 12). A thin layer of a release agent may be applied to the transfer apparatus and allowed to dry. Suitable release agents include silicone fluids, PVA, sprays, and wax emulsions. Use of a release agent can ease the removal of the bracket from the receptacle from the apparatus.

Placement of the bracket in the receptacle may be performed bracket by bracket manually or by picking up a set of brackets pre-placed on a physical model of the patient's teeth, in that the empty transfer tray (without the brackets) can be mated with the physical model of the patient's teeth including the brackets and by separating the transfer tray from the model of the patient's teeth. In the latter step the brackets preferably are retained in the transfer tray and released from the model. This may be achieved by a relatively slight temporary bond (e.g., by temporary or weak adhesive) between the brackets and the model.

An adhesive may be applied to the bonding surface of the bracket (and further appliances present in the tray) and the transfer apparatus may be placed on the teeth in a patient's mouth where the adhesive is caused or allowed to harden to establish a bond between the brackets in the tray and the patient's teeth. Once the bond is established the plastic sheeting or other exterior layer may be removed, thereby leaving the positioning layer in place on the patient's teeth. The positioning layer can be peeled off from the patient's teeth and the brackets bonded thereon. Accordingly forces on the brackets bonded to the patent's teeth, and thereby the risks of breaking or affecting the bonds during removal of the transfer tray are minimized.

Use of transparent materials for the component layers may facilitate confirmation of proper placement of the brackets and or other appliances on the teeth.

Additionally, the transfer apparatus may be used for bonding only a single appliance to a patient's tooth. For example, a portion of the transfer apparatus described above may be used to bond a single appliance to a single tooth subsequent to the time that other appliances are bonded, such as in instances where access to the tooth is initially hindered by other teeth. As another example, a portion of the transfer apparatus described above may be used to re-bond one or more appliances that have unintentionally debonded from the tooth, or to bond a new appliance to a tooth to replace the original appliance. Various techniques of this disclosure may be implemented in a wide variety of computer devices, such as servers (including the Cloud), laptop computers, desktop computers, notebook computers, tablet computers, hand-held computers, smart phones, and the like. Any components, modules or units have been described to emphasize functional aspects and does not necessarily require realization by different hardware units. The techniques described herein may also be implemented in hardware, software, firmware, or any combination thereof. Any features described as modules, units or components may be implemented together in an integrated logic device or separately as discrete but interoperable logic devices. In some cases, various features may be implemented as an integrated circuit device, such as an integrated circuit chip or chipset.

If implemented in software, the techniques may be realized at least in part by a non-transitory computer-readable medium comprising instructions that, when executed in a processor, performs one or more of the methods described above. The computer-readable medium may comprise a tangible computer-readable storage medium and may form part of a computer program product, which may include packaging materials. The computer-readable storage medium may comprise random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, and the like. The computer-readable storage medium may also comprise a non-volatile storage device, such as a hard-disk, magnetic tape, a compact disk (CD), digital versatile disk (DVD), Blu-ray disk, holographic data storage media, or other non-volatile storage device. The term "processor," as used herein may refer to any of the foregoing structure or any other structure suitable for implementation of the techniques described herein. In addition, in some aspects, the functionality described herein may be provided within dedicated software modules or hardware modules configured for performing the techniques of this disclosure. Even if implemented in software, the techniques may use hardware such as a processor to execute the software, and a memory to store the software. In any such cases, the computers described herein may define a specific machine that is capable of executing the specific functions described herein. Also, the techniques could be fully implemented in one or more circuits or logic elements, which could also be considered a processor.

## Claims

1. A computer implemented method (100) of making an orthodontic transfer apparatus (300) including a body, the method comprising:
providing (110) a three-dimensional, virtual model of at least a portion of a dental arch (12), the dental arch including a plurality of virtual teeth (13), gingiva (14), and a mold body (15) extending from the gingiva;
providing (130) a virtual appliance analog (20) including a base (23) and a body (22), the appliance analog including a blockout ramp (30) extending from a gingival region of the appliance body;
placing (140) the appliance analog on a labial or lingual surface of a tooth of the plurality of virtual teeth,
extruding (150) the blockout ramp from the appliance analog to at least an area adjacent the gingiva;
fabricating (160) a physical model (10) of the combined virtual dental arch and appliance analog; and
forming the transfer apparatus (300) over the physical model.

2. The method (100) of claim 1, wherein forming the transfer apparatus over the physical model comprises thermoforming a sheet (35) of material.

3. The method (100) of any one of claims 1-2, wherein providing (130) an appliance analog comprises selecting an appliance analog from a library of appliance analogs, and wherein each appliance analog in the library of appliance analogs includes a blockout ramp having the same geometry.

4. The method (100) of any one of claims 1-3, wherein the extruding (150) the ramp includes the steps of extruding the ramp along a first direction and extruding a second portion of the ramp along a second direction, the second portion extending at an oblique angle relative to the first portion.

5. The method (100) of claim 4, wherein extruding (150) the ramp comprises extruding at a draft angle or removing a portion of the ramp such that the ramp height (H) tapers as it reaches the gingiva.

6. The method (100) of claim 1, wherein forming the transfer apparatus (300) over the physical model creates a receptacle (320) in the body corresponding to the location of the appliance analog.

7. The method (100) of claim 6, wherein the receptacle (320) includes recessed regions corresponding to features on the appliance body.

8. The method (100) of claim 1, wherein, when the transfer apparatus (300) is formed over the physical model, the ramp forms a channel (330) connecting the receptacle (320) to the gingival edge (316) of the transfer apparatus (300).

9. The method (100) of claim 8, wherein the channel (330) has a width (W) at least equal to the mesial-distal width of the appliance analog.

10. The method (100) of any one of claims 1-5, wherein providing (130) a virtual appliance analog including a base and a body further comprises providing a virtual set of orthodontic appliances; and providing a virtual set of analogs, each analog being associated with a virtual appliance of the virtual set of appliances, wherein each of the virtual analogs approximates the shape of the associated virtual appliances, wherein the shape of at least one of the analogs differs from the shape of the associated appliances.

11. The method (100) of claim 10 and further comprising the step of modifying the shape of at least one virtual appliance to form at least one of the virtual analogs by reducing or eliminating in the one virtual analog an undercut formed by the one virtual appliance.

12. The method (100) of claim 11, wherein the modifying step comprises increasing a three-dimensional volume represented by the virtual appliance by selectively modifying only a portion of the virtual appliance.

## Patentansprüche

1. Ein computerimplementiertes Verfahren (100) zum Herstellen einer kieferorthopädischen Transfervorrichtung (300), aufweisend einen Körper, wobei das Verfahren aufweist:
Bereitstellen (110) eines dreidimensionalen virtuellen Modells von mindestens einem Abschnitt eines Zahnbogens (12), wobei der Zahnbogen eine Mehrzahl von virtuellen Zähnen (13), Zahnfleisch (14) und einen Formkörper (15) aufweist, der sich von dem Zahnfleisch erstreckt;
Bereitstellen (130) eines virtuellen Apparaturanalogons (20), aufweisend eine Basis (23) und einen Körper (22), wobei das Apparaturanalogon eine Blockierrampe (30) aufweist, die sich von einem Zahnfleischbereich des Apparaturkörpers erstreckt;
Platzieren (140) des Apparaturanalogons auf einer labialen oder lingualen Oberfläche eines Zahns der Mehrzahl von virtuellen Zähnen,
Extrudieren (150) der Blockierrampe von dem Apparaturanalogon zu mindestens einer Fläche angrenzend an das Zahnfleisch;
Erzeugen (160) eines physischen Modells (10) des kombinierten virtuellen Zahnbogens und des Apparaturanalogons; und
Ausbilden der Transfervorrichtung (300) über dem physischen Modell.

2. Das Verfahren (100) nach Anspruch 1, wobei das Ausbilden der Transfervorrichtung über dem physischen Modell ein Thermoformen einer Materialbahn (35) umfasst.

3. Das Verfahren (100) nach einem der Ansprüche 1 bis 2, wobei das Bereitstellen (130) eines Apparaturanalogons ein Auswählen eines Apparaturanalogons aus einer Bibliothek von Apparaturanaloga aufweist und wobei jedes Apparaturanalogon in der Bibliothek von Apparaturanaloga eine Blockierrampe, die dieselbe Geometrie hat, aufweist.

4. Das Verfahren (100) nach einem der Ansprüche 1 bis 3, wobei das Extrudieren (150) der Rampe die Schritte des Extrudierens der Rampe entlang einer ersten Richtung und das Extrudieren eines zweiten Abschnitts der Rampe entlang einer zweiten Richtung aufweist, wobei der zweite Abschnitt sich in einem schrägen Winkel relativ zu dem ersten Abschnitt erstreckt.

5. Das Verfahren (100) nach Anspruch 4, wobei das Extrudieren (150) der Rampe das Extrudieren in einem Entformungswinkel oder ein Entfernen eines Abschnitts der Rampe derart aufweist, dass die Rampenhöhe (H) sich verjüngt, wenn sie das Zahnfleisch erreicht.

6. Das Verfahren (100) nach Anspruch 1, wobei das Ausbilden der Transfervorrichtung (300) über dem physischen Modell eine Aufnahme (320) in dem Körper, die dem Ort des Apparaturanalogons entspricht, schafft.

7. Das Verfahren (100) nach Anspruch 6, wobei die Aufnahme (320) vertiefte Bereiche aufweist, die Merkmalen an dem Apparaturkörper entsprechen.

8. Das Verfahren (100) nach Anspruch 1, wobei, wenn die Transfervorrichtung (300) über dem physischen Modell ausgebildet wird, die Rampe einen Kanal (330), der die Aufnahme (320) mit der Zahnfleischkante (316) der Transfervorrichtung (300) verbindet, ausbildet.

9. Das Verfahren (100) nach Anspruch 8, wobei der Kanal (330) eine Breite (W) hat, die mindestens gleich der mesial-distalen Breite des Apparaturanalogons ist.

10. Das Verfahren (100) nach einem der Ansprüche 1 bis 5, wobei das Bereitstellen (130) eines virtuellen Apparaturanalogons, aufweisend eine Basis und einen Körper, ferner das Bereitstellen eines virtuellen Satzes von kieferorthopädischen Apparaturen einschließt; und Bereitstellen eines virtuellen Satzes von Analoga, wobei jedes Analogon einer virtuellen Apparatur des virtuellen Satzes von Apparaturen zugeordnet ist, wobei jedes der virtuellen Analoga sich an die Form der zugeordneten virtuellen Apparaturen annähert, wobei die Form von mindestens einem der Analoga sich von der Form der zugeordneten Apparaturen unterscheidet.

11. Das Verfahren (100) nach Anspruch 10 und ferner aufweisend den Schritt des Modifizierens der Form mindestens einer virtuellen Apparatur, um mindestens eines der virtuellen Analoga durch Verringern oder Eliminieren eines Hinterschnitts, der durch die eine virtuelle Apparatur ausgebildet wird, in dem einen virtuellen Analogon auszubilden.

12. Das Verfahren (100) nach Anspruch 11, wobei der Modifizierungsschritt ein Erhöhen eines dreidimensionalen Volumens, das durch die virtuelle Apparatur dargestellt wird, durch selektives Modifizieren nur eines Abschnitts der virtuellen Apparatur aufweist.

## Revendications

1. Procédé mis en oeuvre par ordinateur (100) de fabrication d'un appareil de transfert orthodontique (300) comportant un corps, le procédé comprenant :
la fourniture (110) d'un modèle virtuel tridimensionnel d'au moins une partie d'une arcade dentaire (12), l'arcade dentaire comportant une pluralité de dents virtuelles (13), une gencive (14), et un corps de moule (15) s'étendant à partir de la gencive ;
la fourniture (130) d'un analogue d'appareil virtuel (20) comportant une base (23) et un corps (22), l'analogue d'appareil comportant une rampe de blocage (30) s'étendant à partir d'une région gingivale du corps d'appareil ;
le placement (140) de l'analogue d'appareil sur une surface labiale ou linguale d'une dent de la pluralité de dents virtuelles,
l'extrusion (150) de la rampe de blocage de l'analogue d'appareil à au moins une zone adjacente à la gencive ;
la fabrication (160) d'un modèle physique (10) de l'arcade dentaire virtuelle et de l'analogue d'appareil combinés ; et
la formation de l'appareil de transfert (300) sur le modèle physique.

2. Procédé (100) selon la revendication 1, dans lequel la formation de l'appareil de transfert sur le modèle physique comprend le thermoformage d'une feuille (35) de matériau.

3. Procédé (100) selon l'une quelconque des revendications 1 ou 2, dans lequel la fourniture (130) d'un analogue d'appareil comprend la sélection d'un analogue d'appareil à partir d'une bibliothèque d'analogues d'appareils, et dans lequel chaque analogue d'appareil dans la bibliothèque d'analogues d'appareils comporte une rampe de blocage ayant la même géométrie.

4. Procédé (100) selon l'une quelconque des revendications 1 à 3, dans lequel l'extrusion (150) de la rampe comporte les étapes consistant à extruder la rampe le long d'une première direction et à extruder une seconde partie de la rampe le long d'une seconde direction, la seconde partie s'étendant selon un angle oblique par rapport à la première partie.

5. Procédé (100) selon la revendication 4, dans lequel l'extrusion (150) de la rampe comprend l'extrusion à un angle de dépouille ou le retrait d'une partie de la rampe de telle sorte que la hauteur de rampe (H) s'effile à mesure qu'elle atteint la gencive.

6. Procédé (100) selon la revendication 1, dans lequel la formation de l'appareil de transfert (300) sur le modèle physique crée un réceptacle (320) dans le corps correspondant à l'emplacement de l'analogue d'appareil.

7. Procédé (100) selon la revendication 6, dans lequel le réceptacle (320) comporte des régions en retrait correspondant à des caractéristiques sur le corps d'appareil.

8. Procédé (100) selon la revendication 1, dans lequel, lorsque l'appareil de transfert (300) est formé sur le modèle physique, la rampe forme un canal (330) reliant le réceptacle (320) au bord gingival (316) de l'appareil de transfert (300).

9. Procédé (100) selon la revendication 8, dans lequel le canal (330) a une largeur (W) au moins égale à la largeur mésiale-distale de l'analogue d'appareil.

10. Procédé (100) selon l'une quelconque des revendications 1 à 5, dans lequel la fourniture (130) d'un analogue d'appareil virtuel comportant une base et un corps comprend en outre la fourniture d'un ensemble virtuel d'appareils orthodontiques ; et la fourniture d'un ensemble virtuel d'analogues, chaque analogue étant associée à un appareil virtuel de l'ensemble virtuel d'appareils, dans lequel chacun des analogues virtuels se rapproche de la forme des appareils virtuels associées, dans lequel la forme d'au moins un des analogues diffère de la forme des appareils associés.

11. Procédé (100) selon la revendication 10 et comprenant en outre l'étape de modification de la forme d'au moins un appareil virtuel pour former au moins un des analogues virtuels en réduisant ou en éliminant une contre-dépouille dans l'un analogue vitrtuel formé par l'appareil virtuel.

12. Procédé (100) selon la revendication 11, dans lequel l'étape de modification comprend l'augmentation d'un volume tridimensionnel représenté par l'appareil virtuel en modifiant sélectivement une partie de l'appareil virtuel.
